(19) Europäisches Patentamt

European Patent Office

Office européen des brevets

(11) Veröffentlichungsnummer: **0 299 404 B1**

# (12) EUROPÄISCHE PATENTSCHRIFT

(45) Veröffentlichungstag der Patentschrift: **11.11.92**

(21) Anmeldenummer: **88111042.3**

(22) Anmeldetag: **11.07.88**

(51) Int. Cl.⁵: **H02M 7/538**

---

(54) **Transistor Endstufe, insbesondere für einen Wechselrichter.**

---

(30) Priorität: **14.07.87 DE 3723169**
**29.09.87 DE 3732735**

(43) Veröffentlichungstag der Anmeldung:
**18.01.89 Patentblatt 89/03**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
**FR-A- 2 578 697**
**US-A- 3 829 794**
**US-A- 4 638 420**

(73) Patentinhaber: **THOMSON ELECTROMENAGER S.A.**
**74, Rue de Surmelin**
**F-75020 Paris(FR)**

(72) Erfinder: **Rilly, Gerard, Dr.**
**Panoramaweg 6**
**W-7731 Unterkirnach(DE)**
Erfinder: **Morizot, Gerard, Ing.**
**Kopsbühl 56**
**W-7730 VS-Villingen(DE)**

(74) Vertreter: **Einsel, Robert, Dipl.-Ing.**
**Deutsche Thomson-Brandt GmbH Patent-und Lizenzabteilung Göttinger Chaussee 76**
**W-3000 Hannover 91(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 299 404 B1

# Beschreibung

Es sind Wechselrichter bekannt, bei denen die Reihenschaltung von zwei Transistoren an eine Betriebsgleichspannung angeschlossen ist und die Transistoren durch eine Steuerschaltung im Gegentakt abwechselnd leitend gesteuert und gesperrt werden. Die Last liegt dabei zwischen dem Verbindungspunkt der beiden Transistoren und dem Verbindungspunkt einer an die Betriebsgleichspannung angeschlossenen Reihenschaltung von zwei Kondensatoren. Bei einer solchen Schaltung ist es bekannt, parallel zu den Transistoren und damit praktisch auch zu den Kondensatoren je einen hochohmigen Widerstand zu schalten. Diese beiden Widerstände sind notwendig, um beim Einschalten eine gleichmäßige Spannungsverteilung auf die beiden Kondensatoren und Transistoren zu gewährleisten und eine Überspannung an diesen Bauteilen zu vermeiden.

Bei einer derartigen Schaltung ist es auch bekannt, vor die Basis des Transistors jeweils ein Netzwerk aus der Parallelschaltung eines Kondensators und einer oder mehreren Dioden zu schalten. Dieses Netzwerk liefert an der Basis eine Vorspannung im Sinne einer Sperrung des Transistors, die gleich der Summe der Flußspannungen der Dioden des Netzwerkes ist. Durch ein solches Netzwerk wird die notwendige periodische Sperrung der Transistoren verbessert.

Es hat sich gezeigt, daß eine solche Schaltung unmittelbar nach dem Einschalten ein undefiniertes Verhalten aufweist. Dies besteht darin, daß ein Transistor zunächst mehrmals zündet. Die genauen Ursachen für dieses Verhalten bei der Einschaltung der Transistoren erschien zunächst schwer übersehbar.

Der Erfindung liegt die Aufgabe zugrunde, eine Transistor-Endstufe der beschriebenen Art so auszubilden, daß das undefinierte Verhalten der Transistoren unmittelbar nach dem Einschalten nicht mehr auftritt.

Diese Aufgabe wird durch die im Anspruch 1 beschriebene Erfindung gelöst. Vorteilhafte Weiterbildungen der Erfindung sind in den Unteransprüchen beschrieben.

Die Erfindung beruht auf folgender Erkenntnis. Die durch das beschriebene Netzwerk an den Basen der Transistoren erzeugte Vorspannung ist zwar im eingeschwungenen Zustand ausreichend. Unmittelbar nach dem Einschalten der Schaltung entsteht jedoch diese Vorspannung zu langsam und bildet daher, soweit feststellbar, die Ursache für das undefinierte Schaltverhalten. Es wurde herausgefunden, daß unmittelbar nach dem Einschalten eine Vorspannung an dem Netzwerk von ungefähr 0,5 V ausreicht, um das undefinierte Verhalten zu vermeiden. Deshalb wird ein zusätzlicher Ladeweg für das Netzwerk geschaffen, der nach dem Einschalten eine ausreichend schnelle Aufladung des Kondensators des Netzwerkes auf eine Sperrspannung von etwa 0,5 V bewirkt.

Gemäß einer bevorzugten Ausführungsform der Erfindung kann dieser Ladeweg mit einem der beiden beschriebenen Symmetrierwiderstände gebildet werden, wenn dieser an eine andere Stelle der Schaltung verlegt wird. Der Symmetrierwiderstand behält dann seine gewünschte Funktion für die Symmetrierung der Spannungen an den Transistoren und bildet zusätzlich im Einschaltaugenblick den gewünschten Ladeweg für den Kondensator des Netzwerkes an der Basis. Die Erfindung benötigt dann keinen schaltungstechnischen Mehraufwand.

Die Erfindung wird anhand der Zeichnung an einem Ausführungsbeispiel erläutert. Darin zeigen

Fig. 1 ein Ausführungsbeispiel der Erfindung und

Fig. 2 eine Abwandlung der Schaltung nach Fig. 1 mit einer anderen Anordnung des Netzwerkes.

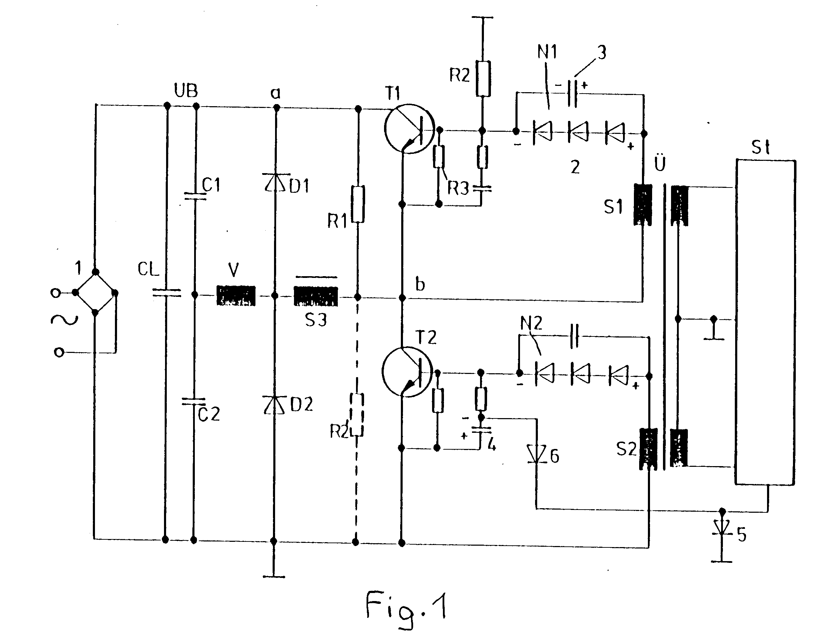

Fig. 1 zeigt die Endstufe eines Wechselrichters mit dem Netzgleichrichter 1, dem Ladekondensator CL, den beiden Kondensatoren C1,C2, zwei sogenannten Freilaufdioden D1,D2, den beiden Transistoren T1,T2 und dem Verbraucher V. Die Transistoren T1,T2 werden von der Steuerschaltung St über den Übertrager Ü abwechselnd im Gegentakt leitend gesteuert und gesperrt, so daß in dem Verbraucher V ein Wechselstrom mit der Frequenz der Steuerspannung erzeugt wird. Den Kollektor/Emitter-Strecken der Transistoren T1,T2 sind zwei Widerstände R1,R2$'$ parallel geschaltet, die nach dem Einschalten eine gleichmäßige Verteilung der praktisch sofort auftretenden Betriebsspannung UB von etwa 300 V auf die Transistoren T1,T2 und die Kondensatoren C1,C2 sicherstellen. Zwischen der Sekundärwicklung S1 des Übertragers Ü und der Basis des Transistors T1 liegt das Netzwerk N1 mit den Dioden 2 und dem Kondensator 3. An diesem Netzwerk wird eine Vorspannung mit der dargestellten Polarität und der Summe der Flußspannungen der Dioden 2 für den Transistor T1 erzeugt. Ein entsprechendes Netzwerk N2 ist an der Basis des Transistors T2 vorgesehen, der von der Sekundärwicklung S2 durch die Steuerschaltung St gesteuert wird. Der Strom durch die Transistoren T1,T2 fließt in jedem Fall durch den Verbraucher V und zusätzlich durch die zum Übertrager Ü gehörende Wicklung S3. Dadurch wird in den Wicklungen S1,S2 jeweils ein vom Kollektorstrom abhängiger Basisstrom für die Steuerung der Transistoren T1,T2 induziert. Die soweit beschriebene Schaltung ist bekannt und näher beschrieben in der DE-PS 34 00 671 (FR-A-2 578 697).

Die soweit beschriebene Schaltung ist nun dahingehend abgewandelt, daß der Widerstand R2′ parallel zum Transistor T2 dort weggelassen und stattdessen zwischen die Basis des Transistors T1 und Erde geschaltet ist. Die Funktion des Widerstandes R2 für die Symmetrierung der Spannungen über T1,T2 und C1,C2 wird dadurch praktisch nicht verändert, da R2 für diese Funktion praktisch auch zwischen dem Punkt b und Erde liegt. Zusätzlich bildet der Widerstand R2 einen Ladeweg für den Kondensator 3 unmittelbar nach dem Einschalten. Nach dem Einschalten ist die Betriebsspannung UB von 300 V praktisch ohne Verzögerung vorhanden. Dadurch fließt ein Ladestrom von der Klemme a über den Widerstand R1 zum Punkt b, über die Wicklung S1, den Kondensator 3 und den Widerstand R2 nach Erde. Dadurch wird der Kondensator 3 in erwünschter Weise schnell auf die dargestellte Polarität aufgeladen. Auf diese Weise wird an dem Kondensator 3 ausreichend schnell eine Vorspannung von etwa 0,5 bis 1,0 V aufgebaut, die das undefinierte Verhalten der Transistoren T1,T2 nach dem Einschalten vermeidet. Da die Dioden 2 eine Gesamtdurchlaßspannung von etwa 2,1 V haben, bleiben die Dioden 2 während dieser Aufladung des Kondensators 3 in erwünschter Weise zunächst gesperrt und haben auf diese Aufladung keinen Einfluß.

Die Widerstände R1 und R2 haben einen Wert von je etwa 100 kOhm und der Kondensator 3 einen Wert von 220 μF. Dadurch ergibt sich eine relativ hohe Zeitkonstante für die Aufladung des Kondensators 3. Die Aufladung erfolgt jedoch trotzdem ausreichend schnell, weil die die Aufladung bewirkende Spannung UB etwa 300 V beträgt und der Kondensator 3 zur Erzielung der gewünschten Wirkung nur auf eine Spannung von etwa 0,5 bis 1,0 V aufgeladen werden muß. An der Basis von T1 liegt noch der relativ zu R1 und R2 niederohmige Widerstand R3 von etwa 1 kOhm. Da dieser Widerstand praktisch parallel zum Kondensator 3 liegt, bildet er einen zusätzlichen Stromweg für den genannten Ladestrom vom Punkt a und verringert die wirksame Zeitkonstante. Da aber im Ersatzschaltbild auch die äquivalente Ladespannung um den Faktor 100 kleiner ist, wird die beschriebene gewünschte Aufladung des Kondensators 3 durch R3 auf 0,5 V nicht nachteilig beeinflußt.

An der Basis des Transistors T2 wird an dem Kondensator 4 zusätzlich eine negative Vorspannung im Sinne einer Sperrung des Transistors T2 erzeugt, und zwar durch Gleichrichtung der von der Steuerschaltung St abgeleiteten Impulsspannung mittels der Diode 5 und der Diode 6. Durch diese zusätzliche Maßnahme kann das Gesamtverhalten der Schaltung nach dem Einschalten weiter verbessert werden.

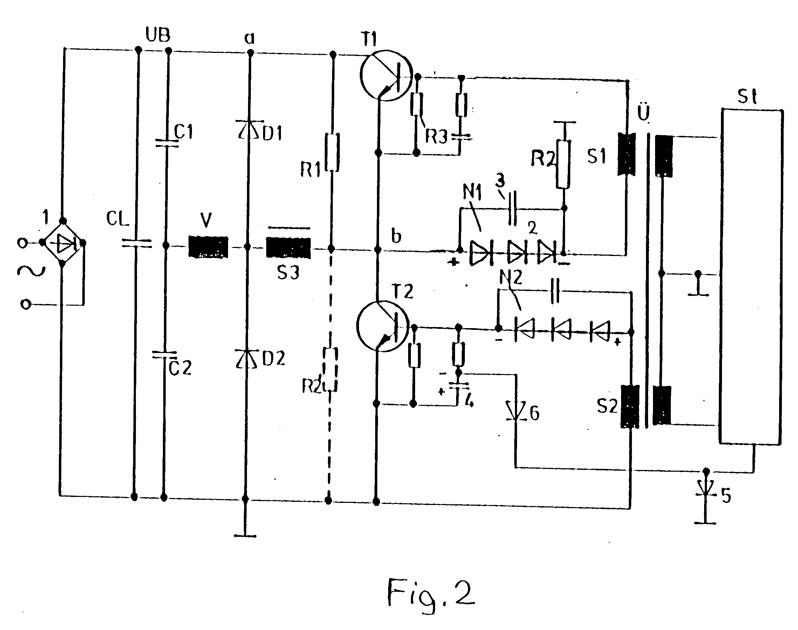

In Fig. 2 liegt das Netzwerk N1 im Gegensatz zu Fig. 1 nicht zwischen der Sekundärwicklung S1 und der Basis des Transistors T1, sondern zwischen der Sekundärwicklung S1 und dem Verbindungspunkt b der Transistoren T1, T2. Unmittelbar nach dem Einschalten ist die Betriebsspannung UB von 300 V praktisch ohne Verzögerung vorhanden. Dadurch fließt ein Ladestrom von der Klemme a über den Widerstand R1 zum Punkt b und von dort über den Kondensator 3 und den Widerstand R2 nach Erde. Durch diesen Ladestrom wird der Kondensator 3 in erwünschter Weise schnell auf die dargestellte Polarität aufgeladen und ausreichend schnell an dem Netzwerk N1 eine Vorspannung von etwa 0,5 - 1,0 V aufgebaut. Es ist ersichtlich, daß der Ladestrom für den Kondensator 3 nicht mehr über die Wicklung S1 fließt. Die am Netzwerk N1 entstehende Vorspannung mit der dargestellten Polarität, also dem negativen Pol an der Basis, wird indessen wie bei der Schaltung nach Fig. 1 in erwünschter Weise an der Basis des Transistors T1 wirksam.

Bei der Schaltung nach Fig. 2 liegt also das Netzwerk zur Erzeugung der Basisvorspannung für T1 an einer anderen Stelle im Weg des Ladestroms als in Fig. 1. Die Wirkung des Netzwerkes für die Erzeugung der Basisvorspannung im Sinne einer Sperrung des Transistors T1 wird dadurch nicht beeinträchtigt. Für diese Wirkung der Vorspannung ist es nämlich gleichwertig, ob das Netzwerk N1 zwischen der Wicklung S1 und der Basis von T1 oder zwischen der Wicklung S1 und dem Verbindungspunkt b der Transistoren T1, T2 liegt. Es wird aber erreicht, daß der Ladestrom nicht mehr über die genannte Sekundärwicklung fließt.

**Patentansprüche**

1. Transistor-Endstufe, für einen Wechselrichter, bei der zwischen einer Betriebsspannung (+UB) und Erde die Reihenschaltungen eines ersten (T1) und zweiten (T2) Transistors, von zwei Kondensatoren (C1,C2) und zwei Symmetrier-Widerständen (R1,R2′) und jeweils vor der Basis des Transistors (T1,T2) ein Vorspannungs-Netzwerk (N1,N2) aus der Parallelschaltung einer Diode (2) und eines Kondensators (3) liegen, **dadurch gekennzeichnet**, daß für den Kondensator (3) des Netzwerkes (N1) an der Basis des ersten Transistors (T1) ein zusätzlicher Ladeweg von der Betriebsspannung (UB) vorgesehen ist.

2. Endstufe nach Anspruch 1, **dadurch gekennzeichnet**, daß die Basen je über eine zwischen Basis und Emitter liegende Wicklung (S1,S2) eines Übertragers (Ü) gesteuert sind.

3. Endstufe nach Anspruch 2, **dadurch gekenn-**

zeichnet, daß der an sich zwischen dem Verbindungspunkt (b) der Transistoren (T1,T2) und Erde notwendige Symmetrierwiderstand (R2$'$) stattdessen zwischen der Basis des ersten Transistors (T1) und Erde liegt (R2).

4. Endstufe nach Anspruch 1, **dadurch gekennzeichnet**, daß an die Basis des zweiten Transistors (T2) zusätzlich eine in Sperrichtung wirkende Vorspannung angelegt ist, die durch Dioden-Gleichrichtung (5,6) einer Impulsspannung gewonnen ist.

5. Endstufe nach Anspruch 4, **dadurch gekennzeichnet**, daß die Impulsspannung von einem zum Starten eines Spannungswandlers dienenden Startoszillator abgeleitet ist.

6. Endstufe nach Anspruch 1, **dadurch gekennzeichnet**, daß das erste Netzwerk (N1) mit dem Symmetrierwiderstand (R2) zwischen dem Verbindungspunkt (b) der Transistoren (T1, T2) und einem Ende der Wicklung (S1) liegt, deren anderes Ende mit der Basis des ersten Transistors (T1) verbunden ist (Fig. 2).

7. Endstufe nach Anspruch 6, **dadurch gekennzeichnet**, daß das andere Ende der Wicklung (S1) unmittelbar mit der Basis des ersten Transistors (T1) verbunden ist (Fig. 2).

## Claims

1. Transistor output stage for an inverter in which the series circuits of a first (T1) and second (T2) transistor, of two capacitors (C1, C2) and two symmetrisation resistors (R1, R2$'$) are located between an operating voltage (+UB) and earth and, in each case, a bias voltage network (N1, N2) consisting of the parallel connection of a diode (2) and a capacitor (3) is situated ahead of the base of the transistor (T1, T2), characterised in that, an additional charging path from the operating voltage (UB) is provided for the capacitor (3) of the network (N1) at the base of the first transistor (T1).

2. Output stage in accordance with claim 1, characterised in that, the bases are each controlled via a winding (S1, S2) of a transformer (Ü) located between base and emitter.

3. Output stage in accordance with claim 2, characterised in that, the symmetrisation resistor (R2$'$) normally necessary between the connection point (b) of the transistors (T1, T2) and earth is located instead between the base of the first transistor (T1) and earth.

4. Output stage in accordance with claim 1, characterised in that, there is additionally applied to the base of the second transistor (T2), a bias voltage effective in the blocking direction which is obtained by diode rectification (5, 6) of a pulse voltage.

5. Output stage in accordance with claim 4, characterised in that, the pulse voltage is derived from a priming oscillator serving for the starting of a voltage converter.

6. Output stage in accordance with claim 1, characterised in that, the first network (N1) with the symmetrisation resistor (R2) is located between the connection point (b) of the transistors (T1, T2) and one end of the winding (S1) whose other end is connected to the base of the first transistor (T1) (Fig. 2).

7. Output stage in accordance with claim 6, characterised in that, the other end of the winding (S1) is connected directly to the base of the first transistor (T1) (Fig. 2).

## Revendications

1. Etage de sortie de transistor pour un onduleur dans lequel les montages en série d'un premier (T1) et d'un second transistor (T2), de deux condensateurs (C1, C2) et deux résistances d'équilibrage (R1, R2$'$) se trouvent entre une tension de fonctionnement (+UB) et la terre et un réseau de tension de polarisation (N1, N2), constitué par le montage en parallèle d'une diode (2) et d'un condensateur (3), se trouve respectivement devant la base de chaque transistor (T1, T2), **caractérisé en ce** qu'un trajet supplémentaire de charge de la tension de fonctionnement est prévu pour le condensateur (3) du réseau (N1) à la base du premier transistor (T1).

2. Etage de sortie selon la revendication 1, **caractérisé en ce** que les bases sont commandées chacune par un enroulement (S1, S2) d'un transformateur (Ü) qui se trouve entre la base et l'émetteur.

3. Etage de sortie selon la revendication 2, **caractérisé en ce** que la résistance d'équilibrage (R2$'$), qui est nécessaire en fait entre le point de connexion (b) des transistors (T1, T2) et la terre, se trouve (R2), au lieu de cela, entre la base du premier transistor (T1) et la terre.

4. Etage de sortie selon la revendication 1, **ca-**

ractérisé en ce qu'une tension de polarisation, qui agit dans le sens du blocage, est appliquée en plus à la base du second transistor (T2), cette tension étant obtenue par redressement par diodes (5, 6) d'une tension d'impulsions.

5. Etage de sortie selon la revendication 4, caractérisé en ce que la tension d'impulsions est dérivée par un oscillateur de démarrage qui sert à faire démarrer un transformateur de tension.

6. Etage de sortie selon la revendication 1, caractérisé en ce que le premier réseau (N1) avec la résistance d'équilibrage (R2) se trouve entre le point de connexion (b) des transistors (T1, T2) et une extrémité de l'enroulement (S1) dont l'autre extrémité est reliée à la base du premier transistor (T1) (fig. 2).

7. Etage de sortie selon la revendication 6, caractérisé en ce que l'autre extrémité de l'enroulement (S1) est reliée directement à la base du premier transistor (T1) (fig. 2).

Fig.1

**Fig. 2**